(19) Europäisches Patentamt
European Patent Office
Office européen des brevets

(11) **EP 3 227 655 B1**

(12) **EUROPÄISCHE PATENTSCHRIFT**

(45) Veröffentlichungstag und Bekanntmachung des Hinweises auf die Patenterteilung:
**08.01.2020 Patentblatt 2020/02**

(51) Int Cl.:
***G01M 3/32*** *(2006.01)*

(21) Anmeldenummer: **15798484.0**

(22) Anmeldetag: **25.11.2015**

(86) Internationale Anmeldenummer:
**PCT/EP2015/077636**

(87) Internationale Veröffentlichungsnummer:
**WO 2016/087280 (09.06.2016 Gazette 2016/23)**

(54) **DICHTHEITSPRÜFUNG MIT TRÄGERGAS IN FOLIENKAMMER**

LEAK-TIGHTNESS TEST WITH CARRIER GAS IN FOIL CHAMBER

CONTRÔLE DE L'ÉTANCHÉITÉ AVEC GAZ PORTEUR DANS CHAMBRE À MEMBRANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.12.2014 DE 102014224799**

(43) Veröffentlichungstag der Anmeldung:
**11.10.2017 Patentblatt 2017/41**

(73) Patentinhaber: **Inficon GmbH**
**50968 Köln (DE)**

(72) Erfinder:
• **WETZIG, Daniel**
**50968 Köln (DE)**
• **DECKER, Silvio**
**50968 Köln (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
**WO-A1-2005/054806     DE-A1- 19 642 099**
**DE-A1-102011 086 486**

**Beschreibung**

Die Erfindung betrifft ein Verfahren zur Dichtheitsprüfung eines Prüflings innerhalb einer Folienkammer.

Es ist bekannt, Prüflinge, wie zum Beispiel Lebensmittelverpackungen, mit einem Prüfgas zu befüllen und in eine Folienkammer einzubringen, die evakuiert wird, um anschließend aus dem Prüfling in die Folienkammer austretendes Prüfgas zu detektieren. In vielen Fällen kann auch im Prüfling (Verpackungsbeutel) bereits vorhandenes Gas als Prüfgas verwendet werden. Dabei kann es sich um Schutzgas handeln oder um Gasbestandteile der Luft, wie zum Beispiel Stickstoff, Sauerstoff oder Kohlendioxid. Als Prüfgas können auch in der Verpackung enthaltene Aromastoffe des verpackten Lebensmittels, zum Beispiel Kaffee, genutzt werden. Als weitere Möglichkeit können als Prüfgas Gase verwendet werden, die in der Verpackung von dem verpackten Lebensmittel erzeugt werden, wie zum Beispiel Kohlendioxid, welches in einer Kaffeepackung nach wenigen Stunden entsteht.

Dadurch, dass der Druck innerhalb der Folienkammer im Bereich außerhalb des Prüflings geringer ist, als innerhalb des Prüflings, tritt Prüfgas durch ein mögliches Leck im Prüfling aus. Bei den bekannten Verfahren wird der Verlauf des Druckanstiegs in der Folienkammer überwacht, um auf ein mögliches Leck zu schließen. Wenn der Druckanstieg ein bestimmtes Maß übersteigt kann dies als Hinweis auf ein Leck im Prüfling gesehen werden.

Es ist weiterhin zum Beispiel aus WO 2005/054806 A1 bekannt, durch eine einen Prüfling enthaltende Prüfkammer einen Trägergasstrom hindurch zu führen. Die Prüfkammer wird dabei mit dem Trägergas gespült. Durch den Prüfling austretendes Prüfgas wird mit dem Trägergasstrom aus der Prüfkammer transportiert und einem Prüfgassensor zugeführt. Die Dichtheitsprüfung mit Hilfe eines Trägergases wurde bislang jedoch nicht mit evakuierten Folienkammern durchgeführt. Vielmehr wurde der Trägergasstrom einer starren Prüfkammer mit konstantem Prüfkammervolumen zugeführt. Der Trägergasstrom muss dabei ausreichend groß sein, um aus dem vorgegebenen Prüfkammervolumen Prüfgas heraus zu spülen und zum Sensor zu transportieren. Daraus resultiert der Nachteil, dass die Prüfgaskonzentration, die sich bei vorgegebener Leckrate aus dem Prüfling in dem gemessenen Gasstrom einstellt, um so geringer ist, je größer der Trägergasstrom gewählt wird. Die Nachweisgrenze für das Prüfgas ist also von der Größe des Trägergasstroms abhängig. Die Empfindlichkeit des Leckgasnachweises kann also nicht durch Reduzieren des Trägergasstroms beliebig erhöht werden.

Derartige Folien-Prüfkammern sind beispielsweise aus DE 10 2011 086 486 A1 und EP 0 931 253 B1 bekannt.

Der Erfindung liegt die Aufgabe zugrunde, ein empfindlicheres Verfahren zur Dichtheitsprüfung bereit zu stellen.

Dies wird erfindungsgemäß mit den Merkmalen von Anspruch 1 dadurch erreicht, dass der Prüfling in eine Folienkammer als Prüfkammer eingebracht wird, der das Trägergas zugeführt wird. Die Folienkammer zeichnet sich dadurch aus, dass sie mindestens einen flexiblen Wandbereich aufweist, der beim Evakuieren an den Prüfling gesogen wird und das Volumen der Folienkammer reduziert. Besonders vorteilhaft sind dabei Folienkammern, deren Wände vollständig aus einer flexiblen Folie bestehen. Beim Evakuieren des Prüflings schmiegt sich die Folie an den Prüfling an. Das Volumen innerhalb der Folienkammer im Bereich außerhalb des Prüflings ist reduziert. Es kann also der Folienkammer ein geringerer Trägergasstrom zugeführt werden als in dem herkömmlichen Fall einer starren Prüfkammer mit nicht veränderbarem Volumen. Durch den geringeren Trägergasstrom ist die Nachweisgrenze gegenüber der Dichtheitsprüfung mit einer Prüfkammer mit starren Wänden erhöht.

Vorzugsweise beträgt der Volumenstrom des zugeführten Trägergases maximal das einfache des Gasgehaltes der Kammer pro Sekunde. Der Druck innerhalb der Folienkammer im Bereich außerhalb des Prüflings sollte während der Messung der Prüfgaskonzentration maximal 700 mbar betragen. Dem Prüfling wird das Prüfgas vor und/oder während der Messung des Prüfgasanteils in dem sich einstellenden Gasgemisch aus Trägergas und Prüfgas zugeführt. Der Prüfgasdruck in dem Prüfling sollte in jedem Fall größer sein als der Folienkammerdruck während der Messung. Vorzugsweise sollte der Prüfgasdruck innerhalb des Prüflings mindestens 1000 mbar betragen.

Der Prüfling ist vor Einbringen in die Folienkammer aktiv mit einem separaten Prüfgas befüllt worden. Alternativ wird ist ein Gas oder Gastbestandteile als Prüfgas genutzt, welche bereits in dem Prüfling enthalten sind. Dabei kann es sich um Bestandteile von Luft, wie zum Beispiel Stickstoff, Sauerstoff oder Kohlendioxid handeln. Es können auch Gase als Prüfgas verwendet werden, welche Aromastoffe eines in dem Prüfling enthaltenen Produkts enthalten oder aus diesen bestehen. Das in dem Prüfling enthaltene Produkt kann ein Lebensmittel, wie zum Beispiel Kaffee, sein. Hierbei können Kaffeearomastoffe als Prüfgas genutzt werden. Eine weitere Möglichkeit besteht darin, Gase oder Gasbestandteile als Prüfgas zu verwenden, welche in dem Prüfling von einem in dem Prüfling enthaltenen Produkt (zum Beispiel ein Lebensmittel) erzeugt werden. Beispielsweise erzeugt Kaffee in einer Kaffeeverpackung nach wenigen Stunden $CO_2$, welches als Prüfgas genutzt werden kann.

Als Prüfgas ist $SF_6$, Formiergas oder He denkbar. Ein besonders vorteilhaftes Prüfgas ist $CO_2$. Als Trägergas kann Luft zum Einsatz kommen. Besonders vorteilhaft ist als Trägergas Stickstoff.

Der Trägergasstrom kann der Folienkammer während der Messung kontinuierlich mit Hilfe einer Trägergas-Fördereinrichtung (Förderpumpe) zugeführt werden. Alternativ kann als Trägergas auch der Effekt genutzt werden, dass aus den Oberflächen der innen liegenden Seiten der Folienkammerwände Gasbestandteile aufgrund des Vakuums durch natürliche Permeation ausgasen. Das Ausgasen dieser Gasbestandteile erfolgt in Abhängigkeit von dem Folienkammerdruck konstant. Die Menge der ausgasenden Bestandteile gibt dabei also den der Folienkammer zugeführten Volumenstrom des Trägergases vor. Bei der Messung der Prüfgaskonzentration wird die Menge des Prüfgases bestimmt und zu der Menge des Trägergases, das heißt der ausgegasten Bestandteile, in dem gemessenen Gasstrom ins Verhältnis gesetzt.

Wenn die Prüfgaskonzentration einen vorgegebenen Wert von zum Beispiel 5 ppm übersteigt, dient dies als Hinweis auf ein Leck im Prüfling.

Alternativ ist denkbar, dass der Folienkammer nur einmalig ein vorgegebenes Trägergasvolumen zugeführt wird, bevor die Prüfgaskonzentration gemessen wird. Das Trägergasvolumen kann der Folienkammer vor oder nach Verstreichen der Akkumulationszeit zugeführt werden. Als Akkumulationszeit wird die Zeit angesehen, die nach dem Evakuieren der Folienkammer und vor dem Messen der Prüfgaskonzentration verstreicht, damit ausreichend messbares Prüfgas durch ein mögliches Leck aus dem Prüfling austreten kann.

Die Alternative bietet den Vorteil, dass die Empfindlichkeit der Messung durch Erhöhen der Akkumulationszeit gesteigert werden kann, ohne die Trägergasmenge zu reduzieren.

Das erfindungsgemäße Verfahren bietet den grundsätzlichen Vorteil, dass die Nachweisgrenze für die Dichtheitsprüfung durch Reduzieren des Prüfkammervolumens (Volumen der Folienkammer im Bereich außerhalb des Prüflings) reduziert werden kann. Das geringe Folienkammervolumen erfordert zur Spülung mit dem Trägergas zudem auch eine geringere Gasmenge und Dauer als im Falle einer starren Prüfkammer mit vorgegebenem Volumen. Im Falle der Nutzung der ausgasenden Gasbestandteile aus der Folie durch natürliche Permeation als Trägergas besteht der weitere Vorteil, dass der Folienkammer kein separates Trägergas aktiv zugeführt werden muss.

Im Folgenden werden anhand der Figuren Ausführungsbeispiele der Erfindung näher erläutert. Es zeigen:

Figur 1    ein Ausführungsbeispiel mit kontinuierlicher Trägergaszufuhr mit Hilfe einer Fördereinrichtung,

Figur 2    ein Ausführungsbeispiel, bei dem aus der Folie ausgasende Bestandteile als kontinuierlicher Trägergasstrom genutzt werden und

Figur 3    ein Ausführungsbeispiel zur einmaligen Zufuhr einer vorgegebenen Trägergasmenge.

Bei jedem der Ausführungsbeispiele ist die Folienkammer 10 aus zwei Folienlagen 12, 14 gebildet. Bei den Folien 12, 14 kann es sich um flexible Folien handeln, die in deren äußeren Randbereich dichtend aufeinandergelegt sind. In der Folienkammer 10 ist der Prüfling 16 enthalten. Das Follenkammervolumen 18 im Bereich außerhalb des Prüflings 16 ist gasleitend mit einer Vakuumpumpe 20 zur Evakuierung der Folienkammer verbunden. Die mit der Vakuumpumpe 20 evakuierte Gasmenge wird einem Gassensor 22 zur Bestimmung der Prüfgaskonzentration in dem evakuierten Gasgemisch zugeführt. Bei dem Gassensor 22 kann es sich beispielsweise um ein Massenspektrometer handeln.

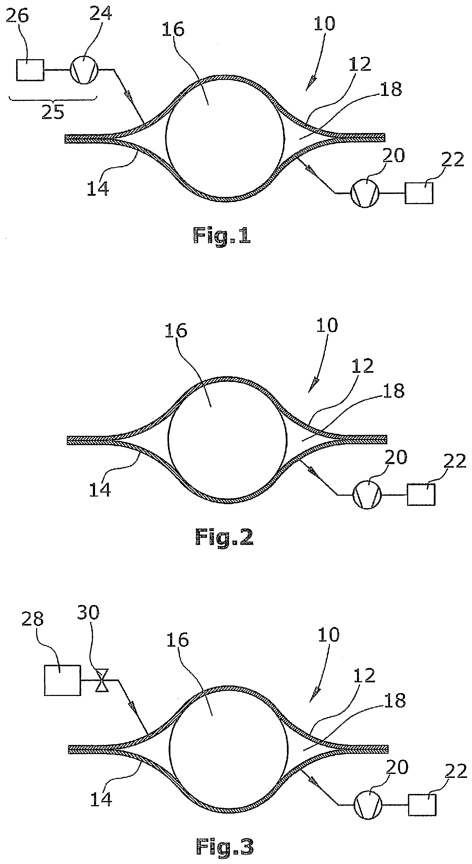

Bei dem ersten Ausführungsbeispiel gemäß Figur 1 ist das Follenkammervolumen 18 zudem mit einer Förderpumpe 24 sowie mit einer Trägergasquelle 26 gasleitend verbunden. Die Förderpumpe 24 und die Trägergasquelle 26 bilden eine Trägergas-Fördereinrichtung 25, um der Folienkammer einen kontinuierlichen Trägergasstrom zuzuführen. Die Förderpumpe 24 fördert das in der Trägergasquelle 26 enthaltene Trägergas in die Folienkammer 10. Anstelle der Förderpumpe 24 kann alternativ auch eine Drossel zum Einsatz kommen.

Das Ausführungsbeispiel gemäß Figur 2 unterscheidet sich von dem ersten Ausführungsbeispiel dadurch, dass keine Trägergasfördereinrichtung vorgesehen ist. Nach dem Evakuieren der Folienkammer 10 werden die Gasbestandteile, die aus den Innenseiten der Folienkammerwände 12, 14 durch Permeation ausgasen, als Trägergas genutzt. Die Permeation dieser Gasbestandteile folgt dabei kontinuierlich.

Das dritte Ausführungsbeispiel gemäß Figur 3 unterscheidet sich von dem ersten Ausführungsbeispiel dadurch, dass das Folienkammervolumen 18 nicht mit einer Trägergas-Fördereinrichtung verbunden ist, sondern vielmehr mit einer ein konstantes Trägergasvolumen (z. B. atmosphärischer Druck) aufweisenden Trägergasquelle 28. Nach dem Evakuieren der Folienkammer 10 mit der Vakuumpumpe 20 wird das Ventil 30 in der gasleitenden Verbindung zwischen der Trägergasquelle 28 und der Folienkammer 10 geöffnet, wodurch das Trägergasvolumen schlagartig in die Folienkammer 10 einströmt.

Der Ablauf des Verfahrens ist bei den drei Ausführungsbeispielen wie folgt:
Bei dem ersten Ausführungsbeispiel wird das Folienkammervolumen 18 durch Evakuieren der Folienkammer 10 mit der Vakuumpumpe 20 reduziert. Anschließend wird der Folienkammer 10 mit der Trägergas-Fördereinrichtung 25 ein reduzierter Trägergasstrom kontinuierlich zugeführt, während der mit der Vakuumpumpe 20 aus der Folienkammer 10 herausgeführte Gasstrom mit dem Sensor 22 analysiert wird. Der Sensor 22 ermittelt die Prüfgaskonzentration in dem gemessenen Gasstrom. Im Falle eines Lecks enthält der gemessene Gasstrom ein Gemisch aus Träger- und Prüfgas. Die Prüfgaskonzentration c im Trägergasstrom beträgt:

$$c = \frac{Q_{Leck}}{Q_{Fl}} + \left(c_0 - c_0 \frac{Q_{Leck}}{Q_{Fl}}\right)$$

Hierbei steht der erste Term für die Prüfgaskonzentration durch das Leck und der zweite für die Ersetzung der ursprünglich vorhandenen Prüfgaskonzentration durch Prüfgas aus dem Leck. Man kann auch schreiben:

$$c = \frac{Q_{Leck}}{Q_{Fl}}(1 - c_{0)} + c_0$$

wobei:

| | |
|---|---|
| c | Gesamtprüfgaskonzentration |
| $c_0$ | Anfangskonzentration von Prüfgas im Trägergasstrom |
| $Q_{Leck}$ | Prüfgasleckagerate aus dem Leck |
| $Q_{Fl}$ | Trägergasfluss |

Bei dem zweiten Ausführungsbeispiel wird das Folienkammervolumen 18 durch Evakuieren der Folienkammer 10 mit der Vakuumpumpe 20 reduziert. Der Prüfling 16 ist bei jedem der Ausführungsbeispiele zuvor mit einem Prüfgas befüllt worden. Mit der Vakuumpumpe 20 wird ein annähernd kontinuierlicher Gasstrom dem Sensor 22 zugeführt. Dabei wird als Trägergas das aus den Folien 12, 14 durch Permeation nach innen austretende Gas genutzt. Der Anteil des Prüfgases in diesem Gasstrom wird mit dem Sensor 22 bestimmt.

Bei dem dritten Ausführungsbeispiel wird nach Evakuieren der Folienkammer 10 das Ventil 30 geöffnet. Das in der Trägergasquelle 28 enthaltene Trägergasvolumen strömt dann in die Folienkammer 10 hinein. Nach Verstreichen einer vorgegebenen Akkumulationszeit, in welcher Prüfgas durch ein mögliches Leck in dem Prüfling 16 in das Folienkammervolumen 18 gelangen kann, wird mit dem Sensor 22 die Prüfgaskonzentration ermittelt. Das Trägergasvolumen aus der Trägergasquelle 28 kann dem Folienkammervolumen 18 vor, während oder nach Verstreichen der Akkumulationszeit zugeführt werden.

**Patentansprüche**

1.  Verfahren zur Dichtheitsprüfung eines Prüflings (16) in einer Folienkammer (10), die mindestens einen flexiblen Wandbereich (12, 14) aufweist, mit den Schritten:

    Einbringen des Prüflings in die Folienkammer, Verwenden eines in dem Prüfling bereits bei Einbringen in die Folienkammer enthaltenen Gases oder Gasbestandteiles als Prüfgas für die Dichtheitsprüfung,

    Evakuieren der Folienkammer auf einen Druck, der geringer ist als der Prüfgasdruck innerhalb des Prüflings und als atmosphärischer Druck, Einbringen eines Trägergases in die Folienkammer in den Bereich außerhalb des Prüflings und Messen der Prüfgaskonzentration des sich einstellenden Gasgemisches in der Folienkammer im Bereich außerhalb des Prüflings.

2.  Verfahren nach Anspruch 1, **dadurch gekennzeichnet, dass** ein kontinuierlicher Trägergasstrom der Folienkammer während der Messung der Prüfgaskonzentration zugeführt wird.

3.  Verfahren nach Anspruch 2, **dadurch gekennzeichnet, dass** der Trägergasstrom mit Hilfe einer Fördereinrichtung (25) aktiv zugeführt wird.

4.  Verfahren nach Anspruch 2, **dadurch gekennzeichnet, dass** der Trägergasstrom durch Gasbestandteile erzeugt wird, die aufgrund des Vakuums in der Folienkammer aus der Folienkammerwand (12, 14) ausgasen.

5.  Verfahren nach Anspruch 1, **dadurch gekennzeichnet, dass** der Folienkammer vor der Messung der Prüfgaskonzentration einmalig eine vorgegebene Menge eines Trägergases zugeführt wird.

6.  Verfahren nach dem vorhergehenden Anspruch, **dadurch gekennzeichnet, dass** die Prüfgaskonzentration nach Ablauf einer vorbestimmten Akkumulationszeit nach dem Einlassen des Trägergases bestimmt wird.

7.  Verfahren nach einem der beiden vorhergehenden Ansprüche, **dadurch gekennzeichnet, dass** die vorgegebene Trägergasmenge nach dem Verstreichen einer vorgegebenen Akkumulationszeit des Prüfgases und vor dem Messen des Prüfgasanteils in die Folienkammer eingelassen wird.

8.  Verfahren nach einem der vorhergehenden Ansprüche, **dadurch gekennzeichnet, dass** das Trägergas mit einem Volumenstrom von maximal dem einfachen der Gasmenge im Folienkammervolumen pro Sekunde in die Folienkammer eingelassen wird.

9.  Verfahren nach einem der vorhergehenden Ansprüche, **dadurch gekennzeichnet, dass** die in die Folienkammer eingebrachte Trägergasmenge den Druck innerhalb der Folienkammer maximal um circa 100 mbar erhöht.

10. Verfahren nach einem der vorhergehenden Ansprüche, **dadurch gekennzeichnet, dass** die Folienkammer vor der Messung der Prüfgaskonzentration auf einen Druck von maximal circa 700 mbar evakuiert wird.

11. Verfahren nach einem der Ansprüche 1 - 10, **dadurch gekennzeichnet, dass** als Prüfgas Bestandteile von Luft, wie zum Beispiel Stickstoff, Sauerstoff oder Kohlendioxid, verwendet werden.

12. Verfahren nach einem der Ansprüche 1 - 10, **dadurch gekennzeichnet, dass** als Prüfgas Aromastoffe eines in dem Prüfling verpackten Produkts verwendet werden.

13. Verfahren nach einem der Ansprüche 1 - 10, **dadurch gekennzeichnet, dass** als Prüfgas ein Gas verwendet wird, welches von einem in dem Prüfling verpackten Produkt erzeugt wird.

14. Verfahren nach einem der Ansprüche 1 - 10, **dadurch gekennzeichnet, dass** der Prüfling vor Einbringen in die Folienkammer mit einem Prüfgas befüllt wird.


## Claims

1. Method for performing a leak-tightness test on a test object (16) in a foil chamber (10) which has at least one flexible wall region (12, 14), the method comprising the following steps:

   introducing the test object into the foil chamber, using a gas or gas component contained in the test object as test gas for the leak-tightness test, evacuating the foil chamber to a pressure lower than the test gas pressure within the test object and lower than atmospheric pressure, introducing a carrier gas into the foil chamber into the region outside the test object, and measuring the test gas concentration of the gas mixture that forms in the foil chamber in the region outside the test object.

2. Method of claim 1, **characterized in that** a continuous carrier gas flow is supplied to the foil chamber during the measuring of the test gas concentration.

3. Method of claim 2, **characterized in that** the carrier gas flow is actively supplied using a conveyor means (25).

4. Method of claim 2, **characterized in that** the carrier gas flow is formed by gas components gassing out from the foil chamber wall (12, 14) due to the vacuum in the foil chamber.

5. Method of claim 1, **characterized in that** a predetermined quantity of a carrier gas is supplied once to the foil chamber before the measuring of the test gas concentration.

6. Method of the preceding claim, **characterized in that** the test gas concentration is determined after the lapse of a predetermined accumulation time after the supply of carrier gas.

7. Method of one of the two preceding claims, **characterized in that** the predetermined quantity of carrier gas is supplied into the foil chamber after a predetermined accumulation time of the test gas has lapsed and before measuring the test gas proportion.

8. Method of one of the preceding claims, **characterized in that** the carrier gas is supplied into the foil chamber at a volume flow of at most once the gas quantity of the foil chamber volume per second.

9. Method of one of the preceding claims, **characterized in that** the quantity of carrier gas introduced into the foil chamber increases the pressure in the foil chamber by at most circa 100 mbar.

10. Method of one of the preceding claims, **characterized in that** the foil chamber is evacuated to a pressure of at most circa 700 mbar before measuring the test gas concentration.

11. Method of one of claims 1-10, **characterized in that** components of air, such as nitrogen, oxygen or carbon dioxide, are used as the test gas.

12. Method of one of claims 1-10, **characterized in that** aromatic substances from a product packaged in the test object are used as the test gas.

13. Method of one of claims 1-10, **characterized in that** a gas is used as the test gas, which gas is produced by a product packaged in the test object.

14. Method of one of claims 1-10, **characterized in that** the test object is filled with a test gas before being placed into the test chamber.


## Revendications

1. Procédé de test d'étanchéité d'un objet de test (16) placé dans une chambre à film (10) comportant au moins une région formant paroi flexible (12, 14), le procédé comprenant les étapes suivantes :

   insertion de l'objet de test dans la chambre à film, utiliser un gaz ou un composant gazeux, déjà contenu dans l'objet de test lors de l'introduction, dans la chambre à film comme gaz de test pour tester l'étanchéité,

faire le vide dans la chambre à film à une pression inférieure à celle de la pression du gaz de test à l'intérieur l'objet de test et à la pression atmosphérique,

introduire un gaz porteur dans la chambre à film à l'extérieur de l'objet de test et

mesurer la concentration du gaz de test dans le mélange gazeux généré dans la chambre à film dans la région située à l'extérieur de l'objet de test.

2. Procédé selon la revendication 1, **caractérisé en ce qu'**un flux de gaz porteur continu de la chambre à film est amené lors de la mesure de la concentration en gaz de test.

3. Procédé selon la revendication 2, **caractérisé en ce que** le flux de gaz porteur est amené activement à l'aide d'un moyen de transport (25).

4. Procédé selon la revendication 2, **caractérisé en ce que** le flux de gaz porteur est généré par des composants gazeux qui dégazent de la paroi de la chambre à film (12, 14) en raison du vide effectué dans la chambre à film.

5. Procédé selon la revendication 1, **caractérisé en ce que** la chambre de film est alimentée à une quantité prédéterminée d'un gaz porteur avant de mesurer une fois la concentration en gaz de test.

6. Procédé selon la revendication précédente, **caractérisé en ce que** la concentration en gaz de test est déterminée après un temps d'accumulation prédéterminé après l'admission du gaz porteur.

7. Procédé selon l'une des revendications précédentes, **caractérisé en ce que** la quantité de gaz porteur prédéterminée est admise après un laps de temps d'accumulation prédéterminé du gaz de test et avant la mesure de la proportion de gaz de test dans la chambre à film.

8. Procédé selon l'une des revendications précédentes, **caractérisé en ce que** le gaz porteur est admis dans la chambre à film avec un débit volumique d'au plus le simple de la quantité de gaz dans le volume de la chambre à film par seconde.

9. Procédé selon l'une des revendications précédentes, **caractérisé en ce que** la quantité de gaz porteur introduite dans la chambre à film augmente la pression dans la chambre à film au maximum d'environ 100 mbar.

10. Procédé selon l'une des revendications précédentes, **caractérisé en ce que** la chambre à film est mise sous vide à une pression maximale d'environ 700 mbar avant la mesure de la concentration en gaz de test.

11. Procédé selon l'une des revendications 1 à 10, **caractérisé en ce que** l'on utilise comme gaz de test des composants de l'air, tels que l'azote, l'oxygène ou le dioxyde de carbone.

12. Procédé selon l'une des revendications 1 à 10, **caractérisé en ce que** l'on utilise comme gaz de test des substances aromatiques d'un produit emballé dans l'objet de test.

13. Procédé selon l'une des revendications 1 à 10, **caractérisé en ce que** l'on utilise comme gaz de test un gaz qui est généré par un produit emballé dans l'objet de test.

14. Procédé selon l'une des revendications 1 à 10, **caractérisé en ce que** l'objet de test est rempli d'un gaz de test avant l'introduction dans la chambre à film.

Fig.1

Fig.2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005054806 A1
- DE 102011086486 A1
- EP 0931253 B1